# EUROPEAN PATENT APPLICATION

(11) **EP 4 600 036 A1**
(43) Date of publication of application: **13.08.2025**
(21) Application number: 24305223.0
(22) Date of filing: 09.02.2024
(51) Int. Cl.: B32B 15/085, B32B 15/09, B32B 27/32, B32B 27/36

(54) **MULTILAYER PACKAGING FOR STORING SEMEN EXTENDERS**

(71) Applicant: IMV Technologies, 61300 Saint-Ouen-sur-Iton (FR)
(72) Inventor: SCHMITT, Eric, 61300 SAINT-OUEN-SUR-ITON (FR); CAMUGLI, Sabine, 61300 SAINT-OUEN-SUR-ITON (FR); CARION, Olivier, 61300 SAINT-OUEN-SUR-ITON (FR); GORGES, Jean-Charles, 61300 SAINT-OUEN-SUR-ITON (FR)
(74) Representative: Santarelli

(57) **Abstract**

The present invention relates to the use of a multilayer packaging, preferably a film, for storing a semen extender, said film comprising polyethylene terephthalate, polyethylene, aluminium and a desiccant.

## Description

### FIELD OF THE INVENTION

The present invention relates to the use of a multilayer packaging, preferably a film, for storing semen extenders.

### BACKGROUND AND PRIOR ART

Semen extender are often used in assisted reproduction technology (ART) to increase the volume of the semen until the required dose while preserving the functional characteristics of the sperm cells and in particular their fertilizing ability. At the present time, semen extender are usually stored in sealed pouches and can only be stored in very specific and limited ranges of temperature, humidity and pressure and this for a very limited period of time.

Beyond these very specific and limited storage conditions and time, the quality of semen extender decreases which results in a decrease of the semen motility and increase of semen agglutination.

The present invention aims to overcome the above-mentioned drawbacks of the sealed pouches of the prior art used for storing semen extenders.

Surprisingly and unexpectedly, the present inventors have discovered that the multilayer packaging, preferably the film, according to the present invention makes it possible to dispense with current very specific and limited storage conditions and times while preserving the quality of semen extender and thus while maintaining the semen motility and avoiding the semen agglutination after long-term storage and extreme storage conditions.

### SUMMARY OF THE INVENTION

The present invention relates to the use of a multilayer packaging, preferably a film, for storing a semen extender, said film comprising polyethylene terephthalate, polyethylene, aluminium and a desiccant.

### DETAILED DESCRIPTION

It will be noted that, in the context of the present application, and unless otherwise stipulated, the ranges of values indicated are to be understood as including boundaries.

The present invention relates to the use of a multilayer packaging, preferably a film, for storing a semen extender, said film comprising polyethylene terephthalate (PET), polyethylene (PE), aluminium (Al) and a desiccant.

Preferably, the multilayer packaging is in the form of a film, preferably of a multilayer film.

The desiccant may be selected from natural minerals such as bentonite, zeolites, silica, silicates such as sodium aluminosilicate, calcium carbonate, and mixtures thereof.

The desiccant may be a molecular sieve desiccant.

The polyethylene may be coextruded with the desiccant as previously defined.

Preferably, the desiccant is incorporated in one of the layers of the packaging, preferably of the film.

Preferably the packaging, more preferably the film comprises:
- from 5 to 30%, preferably from 8 to 15% by weight of polyethylene terephthalate with respect to the total weight of the packaging, preferably of the film,
- from 25 to 80%, preferably from 50 % to 75% by weight of polyethylene with respect to the total weight of the packaging, preferably of the film,
- from 5 to 20%, preferably from 6% to 10% by weight of aluminium with respect to the total weight of the packaging, preferably of the film,
- from 5 to 30%, preferably from 7% to 25% by weight of desiccant with respect to the total weight of the polyethylene.

Preferably, the packaging, more preferably the film has the following structure from outside to inside:
- a polyethylene terephthalate (PET) layer,
- an aluminium layer or foil, and
- a polyethylene (PE) layer co-extruded with a desiccant.

Additional layers may be present between each described layers.

The thickness of the polyethylene terephthalate (PET) layer may be comprised between 7 µm and 30 µm and preferably between 11 µm and 26 µm.

The thickness of the aluminium layer or foil may be comprised between 3 µm and 25 µm and preferably 6.5 µm and 20 µm.

The thickness of the polyethylene (PE) layer co-extruded with a desiccant may be comprised between 30 µm and 130 µm and preferably between 45 µm and 115 µm.

The packaging, preferably the film, may further comprise at least one overlacquer such as acrylate copolymers, and/or at least one ink such as carbon black , and/or at least one adhesive such as polyurethane, and/or at least one a primer such as nitrocellulose and/or at least an oxide such as silicon dioxide, aluminium oxide and/or sodium oxide.

The at least one overlacquer may be present in an amount comprised between 1 and 20 % by weight with respect to the total weight of the packaging, preferably of the film..

The at least one ink may be present in an amount comprised between 0.1 and 10 % by weight with respect to the total weight of the packaging, preferably of the film..

The at least one adhesive may be present in an amount comprised between 0 and 45 g/m², preferably between 3 and 32 g/m² of said packaging, preferably of said film.

The at least one primer may be present in an amount comprised between 0 and 5 g/m², preferably between 0.05 and 1.5 g/m² of said packaging, preferably of said film.

The at least an oxide such as silicon dioxide, aluminium oxide and/or sodium oxide may be present in an amount comprised between 0 and 40 % by weight, preferably between 0.01 and 32% by weight with respect to the total weight of the packaging, preferably of the film.

The film may further comprise water in an amount inferior or equal to 5% by weight, preferably in an amount comprised between 0% and 5% by weight, and more preferably between 0.01 and 4% by weight with respect to the total weight of the packaging, preferably of the film.

Preferably, the packaging, more preferably the film, has the following structure from outside to inside:
- a polyethylene terephthalate (PET) layer,
- optionally a primer layer,
- optionally a first adhesive layer,
- an aluminium layer or foil,
- optionally a second adhesive layer, and
- a polyethylene (PE) layer co-extruded with a desiccant.

Additional layers may be present between each described layers.

Preferably, the packaging, more preferably the film, has the following structure from outside to inside:
- optionally an overlacquer layer,
- optionally an ink layer,
- a polyethylene terephthalate (PET) layer,
- optionally an adhesive layer,
- an aluminium layer or foil, and
- a polyethylene (PE) layer co-extruded with a desiccant.

Additional layers may be present between each described layers.

Advantageously, said packaging, preferably said film, forms a barrier to water vapour and oxygen and absorbs moisture of the semen extender.

Preferably, the packaging, more preferably the film, has a water vapor transmission rate inferior or equal to 0.5 g/ (m².24h) at 38°C and 90% RH (Relative Humidity), preferably inferior or equal to 0.25 g/ (m².24h) at 38°C and 90% RH (Relative Humidity), preferably inferior or equal to 0.15 g/ (m².24h) at 38°C and 90% RH (Relative Humidity), more preferably comprised between 0 and 0.1 g/ (m².24h) at 38°C and 90% RH (Relative Humidity), and even more preferably comprised between 0.001 and 0.1 g/ (m².24h) at 38°C and 90% RH (Relative Humidity).

Preferably, the packaging, more preferably the film has an oxygen transmission rate inferior or equal to 1.5 cm³/ (m².24h.0.1Mpa) at 23±2°C, preferably inferior or equal to 1.0 cm³/ (m².24h.0.1Mpa) at 23±2°C, more preferably inferior or equal to 0.5 cm³/ (m².24h.0.1Mpa) at 23±2°C, more preferably comprised between 0 and 0.5 cm³/ (m².24h.0.1Mpa) at 23±2°C and even more preferably comprised between 0.001 and 0.5 cm³/ (m².24h.0.1Mpa) at 23±2°C.

Preferably, the packaging, more preferably the film has a moisture absorption capacity superior or equal to 2 g/m² at 25°C and 40% RH (Relative Humidity), preferably superior or equal to 2.5 g/m² at 25°C and 40% RH (Relative Humidity), more preferably superior or equal to 4 g/m² at 25°C and 40% RH (Relative Humidity), more preferably superior or equal to 6.0 g/m² at 25°C and 40% RH (Relative Humidity), more preferably comprised between 6 and 15 g/m² at 25°C and 40% RH (Relative Humidity), and even more preferably comprised between 6 and 10 g/m² at 25°C and 40% RH (Relative Humidity).

Preferably, in the packaging, preferably in the film, the ratio between the water content (g) in said packaging, preferably in said film, and the absorption capacity (g) of said packaging, preferably of said film, is inferior or equal to 3, preferably is comprised between 0.001 and 3.

The packaging, preferably the film, may have a thickness comprised between 50 µm and 165 µm, preferably between 70 µm and 155 µm, and more preferably between 95 µm and 145 µm.

The total weight of the packaging, preferably of the film, may be comprised between 75 g/m² and 200 g/m², preferably between 100 g/m² and 175 g/m² and more preferably between 123 g/m² and 147 g/m².

Advantageously, the packaging, preferably the film, is resistant to mechanical stress thereby facilitating the transport and storage conditions without risk of damaging the packaging, preferably the film, containing the semen extender.

Advantageously, the film may be in the form of a single pouch made of such film within which said semen extender is stored in its integrality. Advantageously, the pouch is hermetically sealed.

By "semen extender" it is preferably understood any liquid diluent, preferably aqueous solution, used to increase the volume of the semen until the required dose while preserving the functional characteristics of the sperm cells and in particular their fertilizing ability.

The semen extender may be in the form of a powder.

The semen extender may be selected from animal semen extender. Preferably, the animal semen extender may be selected from mammal semen extender such as bull semen extender, cattle semen extender such as bovine semen extender, porcine semen extender, equine semen extender, goat semen extender, sheep semen extender, rabbit semen extender, buffalo semen extender, camel semen extender, aquatic animals semen extender such as fish, crustaceans and mollusks semen extender, insects semen extender, cat semen extender, dog semen extender, and avian and poultry semen extender such as chicken, turkey, quail, duck, goose and/or guinea fowl semen extender. More preferably, the animal semen extender is selected from cattle such as bovine, porcine, equine or aqua specie semen extender and even more preferably the animal semen extender is a porcine semen extender.

By "aqua specie" and "aquatic animals" it is preferably understood animal produced and/or raised from aquaculture including fish, crustaceans and/or molluscs.

The semen extender may comprise:
- at least one carbohydrate such as saccharose, lactose, glucose, galactose, fructose, ribose, trehalose and mixtures thereof,
- at least one mineral salt such as sodium (Na⁺), potassium (K⁺), chlorine (Cl⁻), calcium (Ca²⁺), magnesium (Mg²⁺), and mixtures thereof such as K⁺ Cl⁻; Na⁺ Cl⁻; Ca²⁺ 2Cl⁻; Mg²⁺ 2Cl⁻,
- at least one buffer such as citrate and in particular sodium citrate, phosphate, bicarbonate and in particular sodium bicarbonate, TES (N-[tris(hydroxymethyl)methyl]-2-aminoethanesulfonic acid), HEPES ((4-(2-hydroxyethyl)-1-piperazineethanesulfonic acid)), MOPS (3-(N-morpholino)propanesulfonic acid), Tris (tris(hydroxymethyl)aminomethane) and mixtures thereof,
- at least one antibiotic such as penicillin, gentamycin, lincomycin, minocycline streptomycin, and/or mixtures thereof such as the PSLS combination (pennicillin, streptomycin, lincomycin and spectinomycin combination) or the PSLSM combination (penicillin, streptomycin, lincomycin, spectinomycin and minocycline combination).

The semen extender may also further comprise:
- at least one salt of inorganic ions such as sodium chloride, potassium chloride, sodium tartrate, potassium tartrate, sodium acetate, potassium acetate, sodium sulphate, potassium sulphate and mixtures thereof,
- at least one protein based compound such as peptones, milk, lactose, egg yolk, egg phosphatidylcholine (EPC), Bovine Serum Albumin (BSA) and mixtures thereof,
- at least one chelating agent such as EDTA (Ethylenediaminetetraacetic acid),
- at least one antioxidant such as citric acid, amino acid and in particular cysteine, amino acid-based compound and in particular acetylcysteine and/or glutathion, and mixtures thereof, and/or
- at least one compound selected from collagen peptides, polymers and/or co-polymers including polysaccharides and polyvinyl alcohol (PVA), glycerol, detergent, and mixtures thereof.

Examples of polymers and co-polymers including polysaccharides include, but are not limited to, anionic polymers and co-polymers including anionic polysaccharides, cationic polymers and co-polymers including cationic polysaccharides, non-ionic polymers and co-polymers including non-ionic polysaccharides, polymers and co-polymers covalently grafted such as polymers and co-polymers grafted with an amine function, thermoresponsive (or temperature-responsive) polymers and co-polymers (such as LCST polymers and copolymers and UCST polymers and copolymers) including polymers and co-polymers grafted from polysaccharides, grafted on polysaccharides or grafted through polysaccharides, and mixtures thereof.

Examples of anionic polymers and co-polymers include, but are not limited to, anionic polysaccharides such as anionic gums and in particular xanthan gum, acacia gum, carrageenan gum, arabinogalactan gum, gellan gum, and mixtures thereof, alginate, pectin, hyaluronic acid (HA), cellulose derivatives such as carboxymethylcellulose (CMC), proteins such as gelatin and ovalbumin, and mixtures thereof
Examples of cationic polymers and co-polymers include, but are not limited to, cationic polysaccharides such as chitosan, cationic derivatives of polysaccharides or cationic modified polysaccharides such as cellulose, dextran and guar gum, proteins such as gelatin and ovalbumin, and mixtures thereof.

Examples of non-ionic polymers and co-polymers include, but are not limited to, non-ionic polysaccharides and in particular microcrystalline cellulose (MCC), cellulose derivatives such as methylcellulose, hydroxymethylcellulose, ethylcellulose, hydroxyethylcellulose, hydroxypropylmethylcellulose (HPMC), and mixtures thereof, scleroglucan, pullulan, ethylene glycol methacrylate polymer (PEGMA), triethylene glycol methacrylate polymer (PTEGMA), oligoethylene glycol methacrylate polymers (POEGMA), Poly(vinylMethylEther) (PVME), Poly(N-isopropylacrylamide) (PNiPAM) and its copolymers, Poly(N-vinylcaprolactam) (PNVCL), poloxamers such as Pluronic^{®} F-127 (CAS 9003-11-6), poly(ethylene oxide-co-propylene oxide) (PEPO), polyoxazoline, and mixtures thereof.

Examples of polymers and copolymers covalently grafted such as polymers and copolymers grafted with an amine function include, but are not limited to, homopolymers and copolymers of N-Substituted poly(acrylamide)s, poly(methacrylamide)s, acrylate polymers and copolymers (such as methacrylate polymers and copolymers), acrylamide polymers and copolymers (such as methacrylamide polymers and copolymers), LCST polymers and copolymers and UCST polymers and copolymers, amino-terminated poloxamers, amino-terminated Poly(N-isopropylacrylamide) (PNiPAM) such as amino-terminated Poly(N-isopropylacrylamide) (PNiPAM) using cysteamine, amino terminated poly(ethylene oxide-co-propylene oxide) (PEPO), amino-terminated Poly(N-vinylcaprolactam) (PNVCL), amino-terminated ethylene glycol methacrylate polymer (PEGMA), amino terminated poly-oligo(ethylene glycol) methyl ether methacrylate polymer (POEGMA), amino-terminated polyoxazolines, and mixtures thereof.

Examples of thermoresponsive polymers (or temperature-responsive polymers) (such as LCST polymers and copolymers and UCST polymers and copolymers) include, but are not limited to, LCST polymers and copolymers, UCST polymers and copolymers, a polymer and/or a co-polymer (side chain) as previously defined grafted to a polysaccharide (backbone) as defined in the present invention, preferably polymers and co-polymers grafted with hyaluronic acid (HA) and/or alginate and in particular sodium alginate such as HA-g-PEPO, Alg-g-PEPO, HA-g-PNiPAm, Alg-g-PNiPAm, HA-g-PEGMA, Alg-g-PEGMA, HA-g-PTEGMA, Alg-g-PTEGMA, HA- PEPO, Alg-PEPO, HA-PNiPAm, Alg-PNiPAm, HA-PEGMA, Alg-PEGMA, HA-PTEGMA, Alg-PTEGMA, and mixtures thereof, more preferably HA-g-PNiPAm, and mixtures thereof.

Examples of LCST polymers include, but are not limited to, N-Substituted poly(acrylamide)s and poly(methacrylamide)s, poly(N-vinyl amide)s, protein related polymers, poly(methyl 2-alkylamidoacrylate)s, poly(oxazoline)s, poly(oxide)s, poly(vinylether)s, poly[oligoethyleneglycol(meth)acrylate]s, poly(phosphoester)s, alkyl-cellulose (such as methycellulose and hydroxypropylmethylcellulose), and mixtures thereof.

Examples of UCST polymers include, but are not limited to, poly(sulfobetaine), N-Substituted poly(acrylamide)s and poly(methacrylamide)s such as poly(N-acryloylglycinamide), poly(N-cyanomethylacrylamide), poly(acrylamide)s and copolymers such as poly(acrylamide-co-acrylonitrile), poly(N-acryloyl asparaginamide), and mixtures thereof.

Preferably, the polymer has a backbone molar mass comprised between 10 000 g/mol and 2 000 000 g/mol, preferably between 50 000 g/mol and 1 000 000 g/mol, preferably between 50 000 g/mol and 400 000 g/mol, more preferably between 100 000 g/mol and 300 000 g/mol and even more preferably between 150 000 and 250 000 g/mol.

Preferably, the polymeric side-chain has a chain molar mass comprised between 500 g/mol and 70 000 g/mol, preferably between 2000 g/mol and 50 000 g/mol and more preferably 2000 g/mol and 40 000 g/mol.

Preferably, the ratio polymeric side-chain and polymer backbone is comprised between 0:100 and 100:0, preferably between 20:80 and 80:20 and more preferably 40:60 and 80:20.

Preferably, the polymers and co-polymers as previously defined are biocompatible polymers and co-polymers.

By "biocompatible polymer or co-polymer" it is preferably understood, a polymer and/or a copolymer suitable to be exposed to body and body fluids and able to improve body functions without altering its normal functioning and without triggering allergies or other side effects.

Preferably, the polymers and co-polymers are selected from polysaccharides, gelatin, ethylene glycol methacrylate polymer (PEGMA), triethylene glycol methacrylate polymer (PTEGMA), poly-oligo(ethylene glycol) methyl ether methacrylate polymer (POEGMA), N-isopropylacrylamide polymer (PNiPAM), Poly-N-vinylcaprolactam polymer (PNVCL), poloxamers such as Pluronic^{®} F-127 (CAS 9003-11-6), poly(ethylene oxide-co-propylene oxide) polymer (PEPO), polymers and co-polymers covalently grafted as previously defined such as polymers and co-polymers grafted with an amine function as previously defined including amino-terminated poloxamers, amino-terminated Poly(N-isopropylacrylamide) (PNiPAM) such as amino-terminated Poly(N-isopropylacrylamide) (PNiPAM) using cysteamine, amino terminated poly(ethylene oxide-co-propylene oxide) (PEPO), amino-terminated Poly(N-vinylcaprolactam) (PNVCL), amino-terminated ethylene glycol methacrylate polymer (PEGMA), amino terminated poly-oligo(ethylene glycol) methyl ether methacrylate polymer (POEGMA), amino-terminated polyoxazolines, and mixtures thereof such as those compounds grafted from a polysaccharide, grafted on a polysaccharide or grafted through a polysaccharide as previously defined.

Examples of polysaccharides according to the present invention include, but are not limited to, gum such as guar gum, xanthan gum, acacia gum, carrageenan gum, arabinogalactan gum, gellan gum, and mixtures thereof, cellulose such as microcrystalline cellulose (MCC) and cellulose derivatives such as methylcellulose, carboxymethylcellulose (CMC), hydroxymethylcellulose, ethylcellulose, hydroxyethylcellulose, hydroxypropylmethylcellulose (HPMC), and mixtures thereof, alginate such as sodium alginate, pectin, pullulan, chitosan, hyaluronic acid (HA), gum such as guar, scleroglucan, and mixtures thereof.

The pectin may be selected from low-molecular (LM) pectin preferably from citrus pectin, apple pectin, and mixtures thereof.

Examples of mixtures of polysaccharides include, but are not limited to, a mixture of pectin and carboxymethylcellulose (CMC) or a mixture of microcrystalline cellulose (MCC) and carboxymethylcellulose (CMC), and mixtures thereof.

Examples of collagen peptides comprise, but are not limited to, peptan.

Examples of semen extender include, but are not limited to, Beltsville Liquid (BL-1), Beltsville Thawing Solution (BTS), Illinois Variable Temperature (IVT), Kiev, Vital^{®}, Acromax^{®}, Androhep^{®}, Androhep^{®} plus, Modena, MR-A^{®}, MULBERRY III^{®}, Reading, X-Cell^{®}, Zorlesco, ZORPVA, SpermAid, Safe Cell Plus, BF-5, BW25, TCF medium, OptiXcell commercialized by IMV Technologies (Saint-Ouen-Sur-Iton, France), OptiXcell Alpha commercialized by IMV Technologies (Saint-Ouen-Sur-Iton, France), NutriXcell ultra commercialized by IMV Technologies (Saint-Ouen-Sur-Iton, France), NutriXcell plus commercialized by IMV Technologies (Saint-Ouen-Sur-Iton, France), PRIMXcell Ultra commercialized by IMV Technologies (Saint-Ouen-Sur-Iton, France), TRIXcell Ultra commercialized by IMV Technologies (Saint-Ouen-Sur-Iton, France), TRIXcell+ commercialized by IMV Technologies (Saint-Ouen-Sur-Iton, France) and mixtures thereof.

Preferably, the semen extender is selected from PRIMXcell Ultra commercialized by IMV Technologies (Saint-Ouen-Sur-Iton, France), NUTRIXcell Ultra commercialized by IMV Technologies (Saint-Ouen-Sur-Iton, France), TRIXcell Ultra commercialized by IMV Technologies (Saint-Ouen-Sur-Iton, France), and/or mixtures thereof.

Advantageously, the packaging, preferably the film, according to the present invention makes it possible to store the semen extender for a long time period, in very wide temperature, pressure and humidity ranges while preserving the quality of semen extender and thus while maintaining the semen motility and avoiding the semen agglutination after long-term storage and extreme storage conditions.

Advantageously, the semen extender can be stored in said packaging, preferably in said film, for a period up to 36 months, preferably up to 24 months and more preferably up to 18 months.

Advantageously, the semen extender can be stored in said packaging, preferably in said film, at a temperature comprised between -20°C and 55°C, preferably between 0°C and 40°C, and more preferably between 2°C and 30°C.

Advantageously, the semen extender can be stored in said packaging, preferably in said film, at a humidity comprised between 0 and 100% RH (Relative Humidity), preferably between 10% and 80% RH (Relative Humidity), and more preferably between 10% and 60% RH (Relative Humidity),
Advantageously, the semen extender can be stored in said packaging, preferably in said film, at a pressure comprised between 450 hPa and 1150 hPa.

Advantageously, the semen extender can be stored in said packaging, preferably in said film, for a period up to 36 months, preferably up to 24 months and more preferably up to 18 months, at a temperature comprised between -20°C and 55°C, preferably between 0°C and 40°C, and more preferably between 2°C and 30°C, at a humidity comprised between 0 and 100% RH (Relative Humidity), preferably between 10% and 80% RH (Relative Humidity), and more preferably between 10% and 60% RH (Relative Humidity), and at a pressure comprised between 450 hPa and 1150 hPa.

### BRIEF DESCRIPTION OF THE FIGURES

**Figure 1** presents the percentage (%) of sperm agglutination after 1 month of storage at 4°C and at 40°C respectively, in a standard aluminium film (comparative) and in a desiccant film according to the present invention.
**Figure 2** presents the percentage (%) of sperm motility after 1 month of storage at 4°C and at 40°C respectively, in a standard aluminium film (comparative) and in a desiccant film according to the present invention.
**Figure 3** presents the percentage (%) of sperm motility at day 3 after a 18 months storage at 4°C, Room Temperature (RT) and at 40°C respectively, in a desiccant film according to the present invention.
**Figure 4** presents the percentage (%) of sperm motility at day 7 after a 18 months storage at 4°C, Room Temperature (RT) and at 40°C respectively, in a desiccant film according to the present invention.

### EXAMPLES

### Example 1:

Powder semen extender PRIMXcell Ultra (commercialized by IMV Technologie, Saint-Ouen-Sur-lton, France) has been stored in:
- a standard film (consisting of PET 12, inks, adhesive, PET 12M, Adhesive and PE 75) (comparative),
- a standard aluminium film (consisting of PET 12, inks, adhesive, Alu 9, Adhesive and PE 75) (comparative), and
- a desiccant film according to the present invention respectively,

during 2 months at 40°C (no humidity control),
during 1 month storage at 55°C, 80% RH (Relative Humidity), and
during 3 month storage at 55°C, 80% RH (Relative Humidity).

Results are shown in table 1.

**Table 1**

| | Powder semen extender stored in standard film (comparative) | Powder semen extender stored in a standard aluminium film (comparative) | Powder semen extender stored in desiccant film according to the present invention |
|---|---|---|---|
| Observations after 2 months storage at 40°C | The powder became 99% yellow. | The powder became 99% beige | The powder remained 100% white. |
| | | | The powder semen extender quality has been preserved |
| Observations after 1 month storage at 55°C, 80% RH (Relative Humidity) | The powder became 99% brown. | The powder became 99% brown. | The powder remained 100% white. |
| | | | The powder semen extender quality has been preserved. |
| Observations after 3 month storage at 55°C, 80% RH (Relative Humidity) | The powder became 99% brown. | The powder became 99% brown. | The powder remained 100% white. |
| | | | The powder semen extender quality has been preserved. |

**Only the desiccant film according to the present invention enabled to preserve the powder semen extender quality after long term storage.**

### Example 2:

8 boars have been diluted at 20M/mL in the semen extender PRIMXcell Ultra (commercialized by IMV Technologies, Saint-Ouen-Sur-Iton, France) and then stored in:
- a standard aluminium film (consisting of PET 12, inks, adhesive, Alu 9, Adhesive and PE 75) (comparative), and
- a desiccant film according to the present invention respectively,

up to 1 month at 4°C (no humidity control), and
up to 1 month at 40°C (no humidity control).

The sperm agglutination and the spermatozoa motility have been measured with CASA IVOS II HAMILTON THORNE.

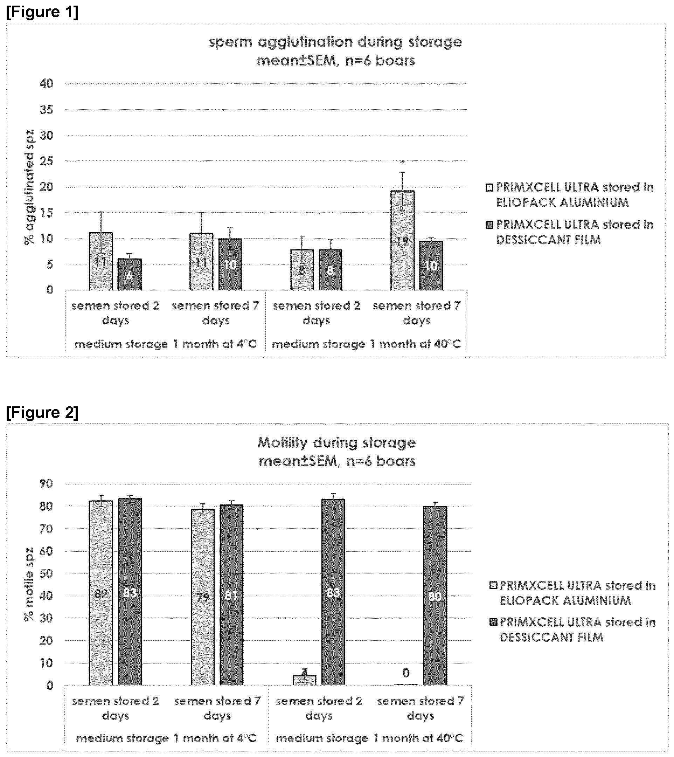

Results are shown on figures 1 and 2.

As shown on figure 1, the storage of said semen extender during 1 month at 4°C and 40°C in films according to the present invention enabled a lower sperm agglutination in comparison to the storage of said semen extender in the standard aluminium comparative film.

As shown on figure 2, the storage of said semen extender during 1 month at 4°C and 40°C in films according to the present invention enabled to maintain the sperm motility in comparison to the storage of said semen extender in the standard aluminium comparative film.

**Only the desiccant film according to the present invention enabled to preserve the powder semen extender quality after the storage and thus to maintain the semen motility and to obtain lower semen agglutination than the semen stored in the comparative films.**

### Example 3:

8 boars have been diluted at 20M/mL in the semen extender PRIMXcell Ultra (commercialized by IMV Technologies, Saint-Ouen-Sur-lton, France) and then stored in:
- a desiccant film according to the present invention,

up to 18 months at 4°C (no humidity control),
up to 18 months at room temperature (RT) (no humidity control), and
up to 18 months at 40°C no humidity control).

The spermatozoa motility has been measured with CASA IVOS II HAMILTON THORNE at day 3 and 4 respectively and compared to fresh semen extender PRIMXcell Ultra (commercialized by IMV Technologies, Saint-Ouen-Sur-lton, France).

Comparison was made with freshly produced semen extender.

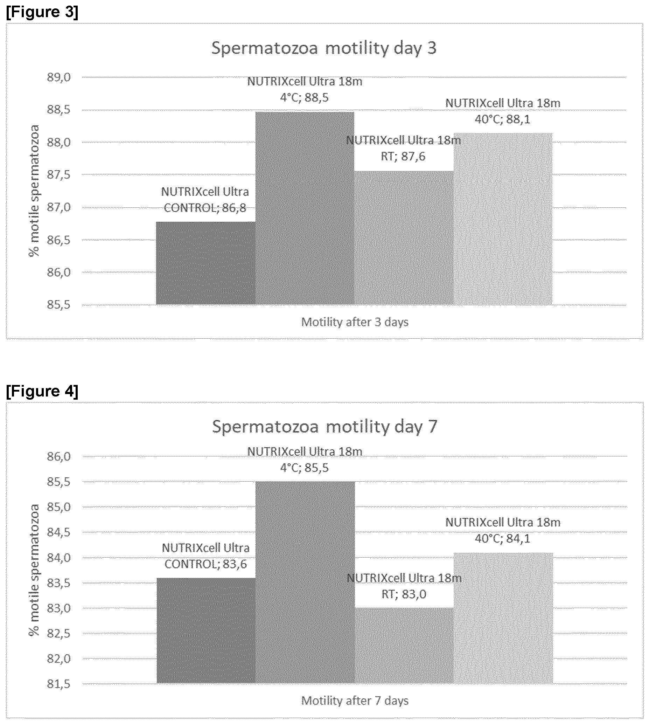

Results are shown on figures 3 and 4.

As shown on figures 3 and 4, the storage of the semen extender during 18 month at 4°C, at room temperature and at 40°C respectively, in films according to the present invention enabled to maintain the sperm motility.

**The desiccant film according to the present invention enabled to preserve the powder semen extender quality after the storage and thus to maintain the semen motility.**

## Claims

1. Use of a multilayer packaging, preferably a film, for storing a semen extender, said film comprising polyethylene terephthalate, polyethylene, aluminium and a desiccant.

2. Use according to claim 1, wherein the desiccant is selected from natural minerals such as bentonite, zeolites, silica, silicates such as sodium aluminosilicate, calcium carbonate, and mixtures thereof.

3. Use according to claim 1 or 2, wherein the polyethylene is coextruded with the desiccant.

4. Use according to anyone of claims 1 to 3, wherein the packaging, preferably the film, comprises:
- from 5 to 30%, preferably from 8 to 15% by weight of polyethylene terephthalate with respect to the total weight of the packaging, preferably of the film,
- from 25 to 80%, preferably from 50 % to 75% by weight of polyethylene with respect to the total weight of the packaging, preferably of the film,
- from 5 to 20%, preferably from 6% to 10% by weight of aluminium with respect to the total weight of the packaging, preferably of the film,
- from 5 to 30%, preferably from 7% to 25% by weight of desiccant with respect to the total weight of the polyethylene.

5. Use according to anyone of claims 1 to 4, wherein the packaging, preferably the film, further comprises at least one overlacquer such as acrylate copolymers, and/or at least one ink such as carbon black, and/or at least one adhesive such as polyurethane, and/or at least one a primer such as nitrocellulose and/or at least an oxide such as silicon dioxide, aluminium oxide and/or sodium oxide.

6. Use according to anyone of claims 1 to 5, wherein the packaging, preferably the film, has a water vapor transmission rate inferior or equal to 0.5 g/ (m².24h) at 38°C and 90% RH (Relative Humidity), preferably inferior or equal to 0.25 g/ (m².24h) at 38°C and 90% RH (Relative Humidity), preferably inferior or equal to 0.15 g/ (m².24h) at 38°C and 90% RH (Relative Humidity), more preferably comprised between 0 and 0.1 g/ (m².24h) at 38°C and 90% RH (Relative Humidity), and even more preferably comprised between 0.001 and 0.1 g/ (m².24h) at 38°C and 90% RH (Relative Humidity).

7. Use according to anyone of claims 1 to 6, wherein the packaging, preferably the film, has an oxygen transmission rate inferior or equal to 1.5 cm³/ (m².24h.0.1Mpa) at 23±2°C, preferably inferior or equal to 1.0 cm³/ (m².24h.0.1Mpa) at 23±2°C, more preferably inferior or equal to 0.5 cm³/ (m².24h.0.1Mpa) at 23±2°C, more preferably comprised between 0 and 0.5 cm³/ (m².24h.0.1Mpa) at 23±2°C and even more preferably comprised between 0.001 and 0.5 cm³/ (m².24h.0.1Mpa) at 23±2°C.

8. Use according to anyone of claims 1 to 7, wherein the packaging, preferably the film, has a moisture absorption capacity superior or equal to 2 g/m² at 25°C and 40% RH (Relative Humidity), preferably superior or equal to 2.5 g/m² at 25°C and 40% RH (Relative Humidity), more preferably superior or equal to 4 g/m² at 25°C and 40% RH (Relative Humidity), more preferably superior or equal to 6.0 g/m² at 25°C and 40% RH (Relative Humidity), more preferably comprised between 6 and 15 g/m² at 25°C and 40% RH (Relative Humidity), and even more preferably comprised between 6 and 10 g/m² at 25°C and 40% RH (Relative Humidity).

9. Use according to anyone of claims 1 to 8, wherein in the packaging, preferably in the film, the ratio between the water content (g) in said packaging, preferably in said film, and the absorption capacity (g) of said packaging, preferably of said film, is inferior or equal to 3, preferably is comprised between 0.001 and 3.

10. Use according to anyone of claims 1 to 9, wherein the packaging, preferably the film, has a thickness comprised between 50 µm and 165 µm, preferably between 70 µm and 155 µm, and more preferably between 95 µm and 145 µm.

11. Use according to anyone of claims 1 to 10, wherein said semen extender is in the form of a powder.

12. Use according to anyone of claims 1 to 11, wherein said semen extender is selected from animal semen extender.

13. Use according to claim 12, wherein said animal semen extender is selected from bull semen extender, cattle semen extender such as bovine semen extender, porcine semen extender, equine semen extender, goat semen extender, sheep semen extender, rabbit semen extender, buffalo semen extender, camel semen extender, aquatic animals semen extender such as fish, crustaceans and mollusks semen extender, insects semen extender, cat semen extender, dog semen extender, and avian and poultry semen extender such as chicken, turkey, quail, duck, goose and/or guinea fowl semen extender.

14. Use according to anyone of claims 1 to 13, wherein said semen extender comprises:
- at least one carbohydrate such as saccharose, lactose, glucose, galactose, fructose, ribose, trehalose and mixtures thereof,
- at least one mineral salt such as sodium (Na⁺), potassium (K⁺), chlorine (Cl⁻), calcium (Ca²⁺), magnesium (Mg²⁺), and mixtures thereof such as K⁺ Cl⁻; Na⁺ Cl⁻; Ca²⁺ 2Cl⁻; Mg²⁺ 2Cl⁻,
- at least one buffer such as citrate and in particular sodium citrate, phosphate, bicarbonate and in particular sodium bicarbonate, TES (N-[tris(hydroxymethyl)methyl]-2-aminoethanesulfonic acid), HEPES ((4-(2-hydroxyethyl)-1-piperazineethanesulfonic acid)), MOPS (3-(N-morpholino)propanesulfonic acid), Tris (tris(hydroxymethyl)aminomethane) and mixtures thereof, and/or
- at least one antibiotic such as penicillin, gentamycin, lincomycin, minocycline streptomycin, and/or mixtures thereof such as the PSLS combination (pennicillin, streptomycin, lincomycin and spectinomycin combination) or the PSLSM combination (penicillin, streptomycin, lincomycin, spectinomycin and minocycline combination).

15. Use according to anyone of claims 1 to 14, wherein said semen extender further comprises :
- at least one salt of inorganic ions such as sodium chloride, potassium chloride, sodium tartrate, potassium tartrate, sodium acetate, potassium acetate, sodium sulphate, potassium sulphate and mixtures thereof,
- at least one protein based compound such as peptones, milk, lactose, egg yolk, egg phosphatidylcholine (EPC), Bovine Serum Albumin (BSA) and mixtures thereof,
- at least one chelating agent such as EDTA (Ethylenediaminetetraacetic acid),
- at least one antioxidant such as citric acid, amino acid and in particular cysteine, amino acid-based compound and in particular acetylcysteine and/or glutathion, and mixtures thereof, and/or
- at least one compound selected from collagen peptides, polymers and/or co-polymers including polysaccharides and polyvinyl alcohol (PVA), glycerol, detergent, and mixtures thereof.
